# FASCICULE DE BREVET EUROPEEN

(11) **EP 0 399 588 B1**
(45) Date de publication et mention de la délivrance du brevet: **25.08.1993**
(21) Numéro de dépôt: 90201147.7
(22) Date de dépôt: 07.05.1990
(51) Int. Cl.: C01D 3/14

(54) **Procédé d'épuration d'une solution aqueuse de chlorure de métal alcalin en composés ammoniacaux et iodés**
Verfahren zur Reinigung einer wässrigen Alkalimetallchloridlösung von Ammoniak- und Jodverbindungen
Process for purifying an aqueous alkali metal chloride solution from ammonia compounds and iodinated compounds

(30) Priorité: 15.05.1989 IT 2050489
(43) Date de publication de la demande: 28.11.1990
(73) Titulaire: SOLVAY (Société Anonyme), B-1050 Bruxelles (BE)
(72) Inventeur: Filippone, Mauro, I-Rosignano-Castiglioncello (IT); Lessi, Carlo, I-Rosignano-Marittimo/Livorno (IT)
(74) Mandataire: Anthoine, Paul

(56) Documents cités:
- BE-A- 674 933
- US-A- 1 861 763
- US-A- 4 131 645
- CHEMICAL ABSTRACTS, vol. 42, no. 3, 10 février 1948 Columbus, Ohio, USA E. Urion et al.: "Purification of brines contaminated with ammonia", column 1030i. &Chimie & Industrie 58, 348(1947).
- CHEMICAL ABSTRACTS, vol. 92, no. 8, 8 février 1980 Columbus, Ohio, USA page 138; colonne de gauche; ref. no. 61134T &JP-A-7924995(Mitsui Toatsu Chemicals)

## Description

L'invention a pour objet l'épuration des solutions aqueuses de chlorure de métaux alcalins, telles que les saumures de chlorure de sodium.

Elle concerne plus particulièrement un procédé d'épuration d'une solution aqueuse de chlorure de métal alcalin en composés ammoniacaux et iodés.

Les solutions aqueuses de chlorure de sodium obtenues à partir d'eau de mer ou par dissolution de sel gemme dans de l'eau contiennent diverses impuretés, parmi lesquelles figurent notamment du calcium, du magnésium, du fer, ainsi que des composés ammoniacaux (ammoniaque, chlorure d'ammonium), des composés iodés (iodures métalliques) et des composés bromés (bromures métalliques). Ces impuretés sont nocives, lorsque les solutions de chlorure de sodium sont traitées dans des cellules d'électrolyse pour produire du chlore et de l'hydroxyde de sodium. En particulier, les composés ammoniacaux, les composés iodés et les composés bromés forment alors du trichlorure d'azote, de l'iode et du brome qui passent dans le chlore et le contaminent. D'autre part, la présence d'ions iodure dans les solutions aqueuses de chlorure de sodium s'est révélée être une cause d'une perte de rendement des cellules d'électrolyse à membranes échangeuses de cations utilisées pour la production de chlore et de solutions aqueuses d'hydroxyde de sodium.

Dans le document BE-A-674933 (SOCIETA CHIMICA DELL'ANIENE), on décrit un procédé d'épuration de saumures en composés ammoniacaux, en composés iodés et en composés bromés, selon lequel on additionne de l'hypochlorite de sodium à la saumure en quantité suffisante pour oxyder la totalité des composés ammoniacaux, iodés et bromés et former de l'azote, de l'iode et du brome, on soumet ensuite la solution aqueuse à un balayage au moyen d'un courant d'air pour entrainer l'azote, puis on la met en contact avec une résine échangeuse d'anions, basique, halogénée, pour éliminer l'iode et le brome. Ce procédé connu réalise une très bonne épuration en composés ammoniacaux et sbromés, mais l'épuration en composés iodés s'est révélée médiocre et généralement insuffisante pour les solutions aqueuses destinées aux cellules d'électrolyse équipées de membranes échangeuses de cations.

On a maintenant trouvé qu'il était possible de remédier à cet inconvénient du procédé connu décrit ci-dessus, en modifiant de manière appropriée l'ordre d'exécution de ses différentes étapes.

En conséquence, l'invention concerne un procédé d'épuration d'une solution aqueuse de chlorure de métal alcalin en composés iodés et en composés ammoniacaux, dans lequel les composés iodés et les composés ammoniacaux sont oxydés et l'iode et l'azote produits sont éliminés respectivement sur une résine échangeuse d'anions, basique, halogénée et dans un courant de gaz inerte; selon l'invention, on opère en deux étapes successives comprenant une première étape dans laquelle on oxyde les composés (iodés et on traite ensuite la solution de chlorure de métal alcalin résultante sur la résine et une seconde étape dans laquelle on oxyde les composés ammoniacaux et on soumet ensuite la solution de chlorure de métal alcalin résultante au courant de gaz inerte.

Dans le procédé selon l'invention, les composés ammoniacaux et iodés comprennent de l'ammoniaque, du chlorure d'ammonium et des iodures métalliques, notamment de métal alcalin. Ils sont naturellement présents dans l'eau de mer ou le sel gemme, lorsque la solution aqueuse de métal alcalin est une solution aqueuse de chlorure de sodium.

L'oxydation des composés iodés est de préférence opérée au moyen de chlore actif, généralement en milieu acide. A cet effet, on peut utiliser du chlore ou de l'hypochlorite de métal alcalin. On préfère l'hypochlorite de sodium. L'oxydation est réglée de manière à décomposer les composés iodés et former de l'iode moléculaire; il convient expressément d'éviter une oxydation excessive conduisant à la formation d'anions IO₃⁻. Cette condition est imposée du fait que les anions IO₃⁻ ne sont pas adsorbés sur la résine échangeuse d'anions utilisée dans le procédé. A cet effet, l'oxydation peut par exemple être suivie et réglée avec précision par une mesure du potentiel d'oxydoréduction du milieu réactionnel.

Après avoir oxydé les composés iodés en iode moléculaire, la solution aqueuse est mise en contact avec la résine échangeuse d'anions, de manière que l'iode soit adsorbé sur la résine. La résine anionique est une résine basique comprenant des sites cationiques fixes et des sites anioniques interchangeables, occupés par des anions halogène tels que Br⁻, Cl⁻ et I⁻. Des résines échangeuses d'anions utilisables dans le procédé selon l'invention sont celles dans lesquelles les sites cationiques fixes sont des groupes ammonium quaternaire fixés sur des polymères à longue chaine tels que des copolymères du styrène et du divinylbenzène. Des résines de ce type sont décrites dans les brevets US-A-2591573, US-A-2597440, US-A-2597494, US-A-2614099, US-A-2630427 et US-A-2900352. Les résines AMBERLITE (ROHM & HAAS CO) conviennent bien, en particulier les variétés connues dans le commerce sous les marques AMBERLITE IRA-400, DOWEX-1, DUOLITE A-42, NALCITE SBR, PERMUTITE S-1. La résine se présente généralement à l'état de granules, au contact desquels on fait circuler la solution aqueuse de chlorure de sodium. La résine utilisée dans le procédé selon l'invention doit avoir ses sites interchangeables occupés par des anions halogène. Les anions chlorure et iodure sont préférés. L'adsorption de l'iode libre de la solution sur la résine se fait avec formation de complexes polyhalogénés, vraisemblablement selon la réaction suivante:

R⁺X⁻ + nI₂ → R⁺(XI₂ₙ)⁻

dans laquelle I₂ représente l'iode moléculaire de la solution aqueuse,
R⁺ représente un site cationique fixe de la résine,
X⁻ représente un ion halogénure occupant un site anionique interchangeable de la résine (par exemple un ion I⁻ ou Cl⁻).

La résine doit être périodiquement régénérée, lorsque ses sites sont saturés par les anions (XI₂ₙ)⁻. La régénération peut être obtenue en lavant la résine avec un solvant dans lequel l'iode est plus soluble que dans l'eau, par exemple un alcool, ou avec un réactif de l'iode. Des informations complémentaires sur la résine et son utilisation sont accessibles dans le brevet GB-A-893692.

La solution aqueuse recueillie à l'issue du traitement sur la résine échangeuse d'anions est ensuite soumise à la seconde étape du procédé selon l'invention. Dans celle-ci, l'oxydation des composés ammoniacaux est également opérée de préférence au moyen de chlore actif, généralement en milieu acide, par exemple au moyen d'un courant de chlore ou d'hypochlorite de métal alcalin. On préfère l'hypochlorite de sodium. L'oxydation est réglée de manière à décomposer les composés ammoniacaux et libérer de l'azote, par exemple selon les réactions :

3 Cl₂ + 2 NH₄OH → 6 HCl + 2 H₂O + N₂

3 Cl₂ + 2 NH₄Cl → 8 HCl + N₂

3 NaClO + 2 NH₄OH → 3 NaCl + 5 H₂O + N₂

3 NaClO + 2 NH₄Cl → 3 NaCl + 3 H₂O + 2 HCl + N₂

A l'issue du traitement d'oxydation, l'azote est extrait de la solution aqueuse dans un courant de gaz inerte. On entend par gaz inerte un gaz qui ne réagit pas avec les constituants de la solution aqueuse et qui ne constitue pas une impureté nocive pour l'application à laquelle la solution est destinée. Des exemples de gaz inertes utilisables dans le procédé selon l'invention sont l'oxygène, l'air, l'argon et le vapeur d'eau. L'air est préféré. Des particularités et détails concernant la seconde étape du procédé sont accessibles dans les brevets US-A-1861763 et BE-A-674933.

Le procédé selon l'invention est de préférence appliqué à des solutions aqueuses qui ont été au préalable épurées en calcium et en magnésium. A cet effet, la première étape du procédé selon l'invention peut être précédée d'un traitement de la solution avec du carbonate de sodium et de l'hydroxyde de sodium, comme il est bien connu en technique (J. S. SCONCE - Chlorine, Its manufacture, Properties and Uses - Reinhold Publishing Corporation - 1962 - Pages 135 et 136).

Dans une forme d'exécution particulière du procédé selon l'invention, la solution aqueuse de chlorure de sodium est soumise à une étape de débromation, en sus des deux étapes précitées. L'étape de débromation a pour fonction d'épurer la solution aqueuse en composés bromés, en éliminant les ions bromure qu'elle contient. Selon l'invention, l'étape de débromation est postérieure à la première étape précitée et elle comprend une oxydation des composés bromés de la solution en brome, suivie d'un traitement de la solution résultante sur une résine échangeuse d'anions, basique, halogénée. Dans cette forme d'exécution du procédé selon l'invention, l'oxydation des composés bromés et le traitement subséquent de la solution aqueuse sur la résine échangeuse d'anions peuvent être opérés d'une façon similaire à la première étape du procédé, qui est décrite plus haut. A cet effet, l'oxydation est de préférence exécutée avec du chlore actif, en milieu acide, par exemple au moyen de chlore gazeux ou d'hypochlorite de métal alcalin, l'hypochlorite de sodium étant l'agent oxydant préféré. L'oxydation doit être réglée pour décomposer les composés bromés et former du brome moléculaire, en évitant expressément une oxydation excessive conduisant à la formation d'anions BrO₃⁻. La résine est du type de celles décrites plus haut, en référence à la première étape du procédé. Dans cette forme d'exécution particulière du procédé selon l'invention, l'étape de débromation peut suivre la seconde étape précitée ou être interposée entre la première étape et le seconde étape.

Dans le procédé selon l'invention, le pH de la solution aqueuse constitue un paramètre important pour le rendement de l'épuration. A cet effet, selon une autre forme d'exécution du procédé selon l'invention, il s'est révélé spécialement avantageux d'exécuter chacune des étapes du procédé en milieu acide, le pH étant inférieur à 3 à la première étape et supérieur à 2 à la seconde étape. Des valeurs de pH préférées sont celles comprises entre 0,5 et 3 à la première étape, entre 2 et 6 à la seconde étape et, le cas échéant, entre 1 et 6 à l'étape de débromation. Les valeurs optimum du pH à chaque étape du procédé dépendent des conditions opératoires et peuvent être déterminées facilement par des essais de routine au laboratoire.

L'invention trouve une application intéressante pour l'épuration des solutions aqueuses de chlorure de sodium destinées à la fabrication du carbonate de sodium par le procédé à l'ammoniaque, ainsi qu'à la production de chlore et d'hydroxyde de sodium par électrolyse.

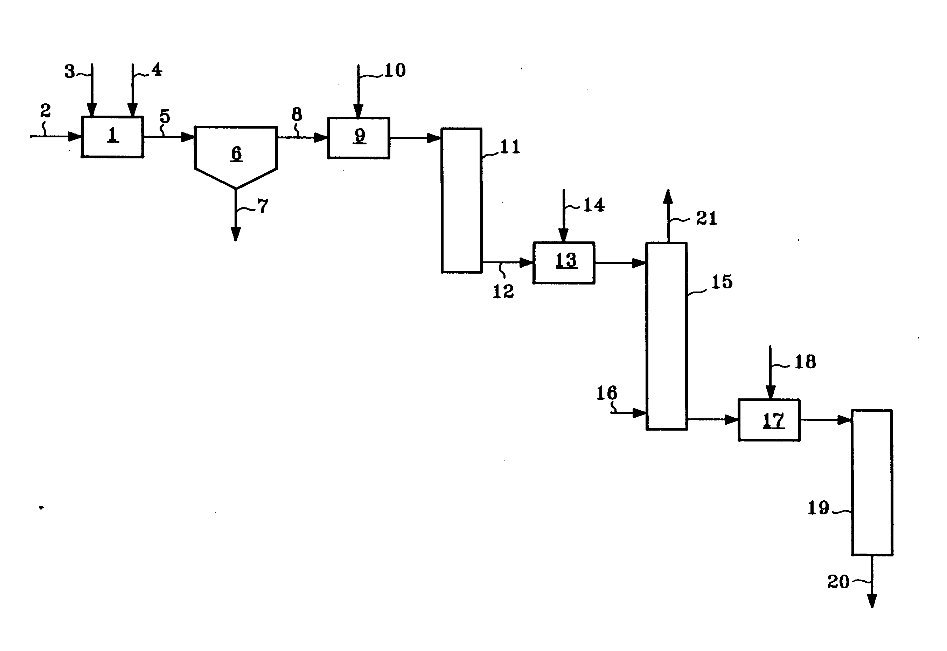

Des particularités et détails de l'invention vont ressortir de la description suivante de la figure unique du dessin annexé, qui représente le schéma d'une forme d'exécution particulière du procédé selon l'invention.

L'installation schématisée à la figure est destinée à épurer une solution aqueuse de chlorure de sodium contaminée par des composés de calcium et de magnésium (CaCl₂, MgCl₂), des composés ammoniacaux (NH₄OH; NH₄Cl) et des composés bromés et iodés (iodures de sodium, de calcium, de magnésium). Elle comprend une chambre de réaction 1, dans laquelle la solution aqueuse de chlorure de sodium 2 est traitée avec du carbonate de sodium 3 et avec de l'hydroxyde de sodium 4 pour précipiter les ions calcium et magnésium à l'état de carbonate de calcium et d'hydroxyde de magnésium. La suspension aqueuse 5 recueillie de la chambre de réaction 1 est transférée dans une chambre de décantation 6, pour séparer le précipité 7 de carbonate de calcium et d'hydroxyde de magnésium. On recueille de la chambre de décantation 6 une solution aqueuse de chlorure de sodium 8 que l'on introduit dans une chambre de réaction 9; dans celle-ci, la solution est acidifiée à pH convenable et additionnée d'une solution aqueuse d'hypochlorite de sodium 10 pour oxyder les ions iodure en iode moléculaire. La quantité d'hypochlorite de sodium utilisée est réglée par une mesure du potentiel d'oxydoréduction du milieu réactionnel, de manière à réaliser une oxydation sensiblement complète des anions iodure I⁻ en iode tout en évitant la formation d'anions iodate IO₃⁻. La solution aqueuse de chlorure de sodium est ensuite introduite dans une colonne 11 remplie de billes d'une résine échangeuse d'anions dont les sites interchangeables sont saturés avec des anions halogène (I⁻, Br⁻, Cl⁻). Dans la colonne, la solution percole à travers la résine et l'iode est progressivement adsorbé sur celle-ci. La solution aqueuse de chlorure de sodium 12 recueillie au pied de la colonne 11 est envoyée dans un réacteur 13 où, après réglage du pH, on lui additionne une solution aqueuse d'hypochlorite de sodium 14 en quantité suffisante pour décomposer les composés ammoniacaux et libérer de l'azote. A la sortie du réacteur 13, la solution aqueuse est introduite au sommet d'une colonne 15 alimentée à la base avec un courant d'air 16. Dans la colonne 15, la solution aqueuse est soumise à un balayage par le courant d'air qui entraine ainsi l'azote hors de la solution. L'air chargé d'azote (21) s'échappe en tête de la colonne 15. La solution aqueuse soutirée au pied de la colonne 15 est introduite dans un réacteur additionnel 17 où elle est additionnée d'une solution aqueuse d'hypochlorite de sodium 18 en quantité réglée pour oxyder les ions bromure en brome moléculaire, tout en évitant la formation d'anions complexes bromate BrO₃⁻. La solution sortant du réacteur 17 est introduite dans une colonne 19 où on la fait percoler à travers une résine échangeuse d'anions, basique, dont les sites interchangeables sont occupés par des anions halogène. Le brome de la saumure est ainsi adsorbé sur la résine, et on recueille au pied de la colonne une solution aqueuse de chlorure de sodium 20 de grande pureté.

Les exemples suivants servent à illustrer l'invention.

Les exemples ont trait à des essais dans lesquels on a mis en oeuvre des solutions aqueuses sensiblement saturées en chlorure de sodium (environ 300 g de chlorure de sodium par litre de solution), préalablement épurées en calcium et en magnésium de la manière habituelle.

### Première série d'exemples (conformes à l'invention).

Les exemples 1 à 3 qui suivent, concernent des essais dans lesquels les solutions aqueuses de chlorure de sodium ont été soumises à un procédé d'épuration conforme à l'invention. A cet effet, elles ont été traitées dans une installation du type de celle décrite ci-dessus en référence au dessin annexé, où on les a soumises successivement à :
une étape d'épuration en iode;
une étape d'épuration en ammoniaque;
une étape d'épuration en brome.

### Exemple 1.

On a mis en oeuvre une solution aqueuse, contenant les impuretés suivantes :
des ions bromure : 54 mg/l;
des ions bromate : <0,2 mg/l;
des ions iodure : 2,9 mg/l;
des ions ammonium : 28 mg/l (exprimé à l'état NH₃).

On a utilisé un débit de solution de 10 l/h.

Dans l'étape d'épuration en iode, la solution aqueuse a été amenée à pH acide et traitée avec un courant de chlore dont le débit a été réglé à une valeur adéquate pour oxyder la totalité des ions iodure en iode en évitant de former des anions iodate. La régulation du débit de chlore a été opérée par une mesure du potentiel d'oxydoréduction du milieu réactionnel, comme exposé plus haut. La solution aqueuse a ensuite été traitée sur une résine échangeuse d'anions AMBERLITE IRA-400 (ROHM & HAAS). La teneur en iode de la solution aqueuse à la sortie de la résine était de 0,5 mg/l.

La solution aqueuse a ensuite été soumise à l'étape d'épuration en ammoniaque. Dans cette étape, on l'a traitée avec un courant de chlore dont le débit a été réglé par une mesure du potentiel d'oxydoréduction à une valeur suffisante pour oxyder la totalité des cations ammonium en libérant de l'azote. La solution aqueuse a ensuite été soumise à un balayage par un courant ascendant d'air au débit de 200 l/h. On a mesuré, dans la solution recueillie au pied de la colonne, une teneur en ions ammonium (exprimée en mg de NH₃) inférieure à 0,2 mg/l.

Dans l'étape d'épuration en brome, la solution aqueuse a été traitée avec un courant de chlore dont le débit a été réglé par une mesure du potentiel d'oxydoréduction à une valeur adéquate pour compléter l'oxydation des ions bromure en brome en évitant de former des anions bromate. La solution aqueuse a ensuite été traitée sur une résine échangeuse d'anions AMBERLITE IRA-400 (ROHM & HAAS). La solution aqueuse recueillie à la sortie de la résine contenait, par litre :
0,5 mg d'iode;
< 0,2 mg d'ammoniac;
3 mg de brome.

### Exemple 2.

On a répété l'essai de l'exemple 1, avec une solution aqueuse de chlorure de sodium contenant les impuretés suivantes :
des ions bromure : 50 mg/l;
des ions bromate : < 0,2 mg/l;
des ions iodure : 2,5 mg/l;
des ions ammonium : 28 mg/l (exprimé à l'état NH₃).

Dans l'exécution de l'essai, on a mis en oeuvre un débit de 10 litres de la solution par heure. A l'issue des trois étapes d'épuration exécutées comme exposé à l'exemple 1, on a recueilli une solution aqueuse de chlorure de sodium contenant, par litre :
0,2 mg d'iode;
0,5 mg d'ammoniac;
0,5 mg d'azote total exprimé à l'état NH₃;
0,6 mg de brome;
0,5 mg d'ions bromate.

### Exemple 3.

On a répété l'essai de l'exemple 1, avec une solution aqueuse de chlorure de sodium contenant les impuretés suivantes :
des ions bromure : 48 mg/l;
des ions bromate : 0,3 mg/l;
des ions iodure : 2,9 mg/l;
des ions ammonium : 27 mg/l (exprimé à l'état NH₃).

Dans l'exécution de l'essai, on a mis en oeuvre un débit de 30 litres de la solution par heure. A l'issue des trois étapes d'épuration exécutées comme exposé à l'exemple 1, on a recueilli une solution aqueuse de chlorure de sodium contenant, par litre :
0,3 mg d'iode;
0,7 mg d'ammoniac;
0,4 mg de brome;
0,1 mg d'ions bromate.

### Seconde série d'exemples (exemples de référence).

Les exemples 4 à 6 dont la description suit concernent des essais dans lesquels les trois étapes d'épuration ont été exécutées dans l'ordre suivant :
(1) : étape d'épuration en ammoniaque;
(2) : étape d'épuration en iode;
(3) : étape d'épuration en brome.

### Exemple 4.

La solution aqueuse, saturée en chlorure de sodium et préalablement épurée en calcium et en magnésium, contenait les impuretés suivantes :
des ions bromure : 48 mg/l;
des ions bromate : 0,3 mg/l;
des ions iodure : 2,9 mg/l;
des ions ammonium : 27 mg/l (exprimé à l'état NH₃).

On a mis en oeuvre un débit horaire de 10 litres de solution.

L'étape d'épuration en ammoniaque a été exécutée comme dans les essais des exemples 1 à 3, le débit d'air de balayage étant égal à 200 l/h. Les étapes d'épuration en iode et en brome ont été exécutées comme dans les essais relatifs aux exemples 1 à 3.

A l'issue de l'essai, on a recueilli une solution de chlorure de sodium contenant :
0,7 mg d'ammoniac;
0,2 mg de brome;
0,1 mg d'ions bromate;
2,3 mg d'iode.

### Exemple 5.

On a répété l'essai de l'exemple 4, avec une solution aqueuse de chlorure de sodium contenant les impuretés suivantes :
des ions bromure : 55 mg/l;
des ions iodure : 3 mg/l;
des ions ammonium : 31 mg/l (exprimé à l'état NH₃).

Le débit horaire de la solution a été de 20 litres.

A l'issue de l'essai, on a recueilli une solution de chlorure de sodium contenant :
0,9 mg de brome;
2,8 mg d'iode.

### Exemple 6.

On a répété l'essai de l'exemple 4, avec une solution aqueuse de chlorure de sodium contenant les impuretés suivantes :
des ions bromure : 48 mg/l;
des ions iodure : 2,9 mg/l;
des ions ammonium : 27 mg/l (exprimé à l'état NH₃).

Le débit horaire de la solution a été de 10 litres.

L'étape d'épuration en ammoniaque a été exécutée comme dans les essais des exemples 1 à 5, mais l'épuration en iode et l'épuration en brome ont été exécutées simultanément en une étape unique qui a suivi l'étape d'épuration en ammoniac.

A l'issue de l'essai, on a recueilli une solution de chlorure de sodium contenant :
0,4 mg de brome;
2,4 mg d'iode.

Une comparaison des résultats des exemples 1 à 3 (conformes à l'invention) avec ceux des exemples 4 à 6 (de référence) montre le progrès apporté par l'invention en ce qui concerne le rendement de l'épuration en iode.

## Revendications

1. Procédé d'épuration d'une solution aqueuse de chlorure de métal alcalin en composés iodés et en composés ammoniacaux, dans lequel les composés iodés et les composés ammoniacaux sont oxydés et l'iode et l'azote produits sont éliminés respectivement sur une résine échangeuse d'anions, basique, halogénée et dans un courant de gaz inerte, caractérisé en ce qu'on opère en deux étapes successives comprenant une première étape dans laquelle on oxyde les composés iodés et on traite ensuite la solution de chlorure de métal alcalin résultante sur la résine et une seconde étape dans laquelle on oxyde les composés ammoniacaux et on soumet ensuite la solution de chlorure de métal alcalin résultante au courant de gaz inerte.

2. Procédé selon la revendication 1, caractérisé en ce que, pour oxyder les composés iodés et les composés ammoniacaux, on traite la solution de chlorure de métal alcalin avec du chlore actif, en milieu acide.

3. Procédé selon la revendication 2, caractérisé en ce que le chlore actif est mis en oeuvre à l'état de chlore gazeux ou d'hypochlorite de métal alcalin.

4. Procédé selon la revendication 2 ou 3, caractérisé en ce que le traitement de la solution aqueuse avec le chlore actif est exécuté dans des conditions réglées pour oxyder la totalité des ions iodure des composés iodés en iode moléculaire à la première étape et la totalité des ions ammonium des composés ammoniacaux en azote moléculaire à la seconde étape.

5. Procédé selon la revendication 4, caractérisé en ce qu'on règle la quantité de chlore actif mise en oeuvre à chaque étape par une mesure du potentiel d'oxydoréduction de la solution aqueuse de chlorure de métal alcalin.

6. Procédé selon l'une quelconque des revendications 1 à 5, caractérisé en ce qu'on règle le pH de la solution de chlorure de métal alcalin au-dessous de 3 à la première étape et au-dessus de 2 à la seconde étape.

7. Procédé selon l'une quelconque des revendications 1 à 6, caractérisé en ce que le gaz inerte mis en oeuvre à la seconde étape est de l'air.

8. Procédé selon l'une quelconque des revendications 1 à 7, caractérisé en ce que la résine échangeuse d'anions mise en oeuvre à la première étape est une résine iodée ou chlorée.

9. Procédé selon l'une quelconque des revendications 1 à 8, caractérisé en ce qu'on soumet la solution de chlorure de métal alcalin à une étape de débromation comprenant une oxydation de composés bromés de la solution en brome et un traitement de la solution résultante sur une résine échangeuse d'anions basique halogénée, l'étape de débromation étant postérieure à la première étape précitée.

10. Procédé selon l'une quelconque des revendications 1 à 9, caractérisé en ce qu'il est appliqué aux solutions aqueuses de chlorure de sodium préalablement épurées en calcium et en magnésium.

## Patentansprüche

1. Verfahren zum Reinigen einer wässrigen Alkalimetallchloridlösung von Jodverbindungen und Ammoniakverbindungen, bei dem die Jodverbindungen und die Ammoniakverbindungen oxydiert werden und das erzeugte Jod und der erzeugte Stickstoff jeweils auf einem basischen, halogenierten Anionenaustauscherharz und in einem Strom von inertem Gas elimiert werden, dadurch gekennzeichnet, daß man in zwei hintereinanderfolgenden Stufen arbeitet, umfassend eine erste Stufe, in der man die Jodverbindungen oxydiert und dann die resultierende Alkalimetallchloridlösung auf dem Harz behandelt und eine zweite Stufe, bei der man die Ammoniakverbindungen oxydiert und anschließend die resultierende Alkalimetallchloridlösung einem Strom von inertem Gas unterzieht.

2. Verfahren nach Anspruch 1, dadurch gekennzeichnet, daß man zum Oxydieren der Jodverbindungen und der Ammoniakverbindungen die Alkalimetallchloridlösung mit aktivem Chlor in saurem Medium behandelt.

3. Verfahren nach Anspruch 2, dadurch gekennzeichnet, daß das aktive Chlor eingesetzt wird im Zustand von gasförmigem Chlor oder Alkalimetallhypochlorit.

4. Verfahren nach Anspruch 2 oder 3, dadurch gekennzeichnet, daß die Behandlung der wässrigen Lösung mit dem aktiven Chlor ausgeführt wird unter bestimmten Bedingungen, um die gesamten Jodidionen der Jodverbindungen zu molekularem Jod bei der ersten Stufe zu oxydieren und die gesamten Ammoniumionen der Ammoniakverbindungen zu molekularem Stickstoff in der zweiten Stufe.

5. Verfahren nach Anspruch 4, dadurch gekennzeichnet, daß man die bei jeder Stufe eingesetzte Menge an aktivem Chlor durch Messung des Oxydoreduktionspotentials der wässrigen Lösung des Alkalimetallchlorids bestimmt.

6. Verfahren nach einem der Ansprüche 1 bis 5, dadurch gekennzeichnet, daß man den pH der Alkalimetallchloridlösung unterhalb 3 in der ersten Stufe und über 2 in der zweiten Stufe festlegt.

7. Verfahren nach einem der Ansprüche 1 bis 6, dadurch gekennzeichnet, daß das bei der zweiten Stufe eingesetzte inerte Gas Luft ist.

8. Verfahren nach einem der Ansprüche 1 bis 7, dadurch gekennzeichnet, daß das in der ersten Stufe eingesetzte Anionenaustauscherharz ein Jod- oder Chlorharz ist.

9. Verfahren nach einem der Ansprüche 1 bis 8, dadurch gekennzeichnet, daß man die Alkalimetallchloridlösung einer Debromierungsstufe unterzieht, die eine Oxydation von Bromverbindungen der Lösung zu brom und eine Behandlung der resultierenden Lösung auf einem basischen, halogenierten Anionenaustauscherharz umfaßt, wobei die Debromierungsstufe nach der vorher genannten ersten Stufe erfolgt.

10. Verfahren nach einem der Ansprüche 1 bis 9, dadurch gekennzeichnet, daß es bei vorher von Kalzium und Magnesium gereinigten wässrigen Natriumchloridlösungen angewendet wird.

## Claims

1. Process for the purification of an aqueous alkali metal chloride solution from iodine compounds and from ammonium compounds, in which the iodine compounds and the ammonium compounds are oxidised and the iodine and nitrogen which are produced are removed, respectively, on a halogenated basic anion exchange resin and in a stream of inert gas, characterised in that the operation is' carried out in two successive stages comprising a first stage in which the iodine compounds are oxidised and the resulting alkali metal chloride solution is then treated on the resin and a second stage in which the ammonium compounds are oxidised and the resulting alkali metal chloride solution is then subjected to the stream of inert gas.

2. Process according to Claim 1, characterised in that the alkali metal chloride solution is treated with active chlorine in acidic medium to oxidise the iodine compounds and the ammonium compounds.

3. Process according to Claim 2, characterised in that the active chlorine is used in the form of gaseous chlorine or of alkali metal hypochlorite.

4. Process according to Claim 2 or 3, characterised in that the treatment of the aqueous solution with active chlorine is performed in conditions controlled so as to oxidise all of the iodide ions of the iodine compounds to molecular iodine in the first stage and all of the ammonium ions of the ammonium compounds to molecular nitrogen in the second stage.

5. Process according to Claim 4, characterised in that the quantity of active chlorine used in each stage is controlled using a measurement of the redox potential of the aqueous alkali metal chloride solution.

6. Process according to any one of Claims 1 to 5, characterised in that the pH of the alkali metal chloride solution is controlled below 3 in the first stage and above 2 in the second stage.

7. Process according to any one of Claims 1 to 6, characterised in that the inert gas used in the second stage is air.

8. Process according to any one of Claims 1 to 7, characterised in that the anion exchange resin used in the first stage is an iodinated or chlorinated resin.

9. Process according to any one of Claims 1 to 8, characterised in that the alkali metal chloride solution is subjected to a debromination stage comprising an oxidation of bromine compounds of the solution to bromine and a treatment of the resulting solution on a halogenated basic anionic exchange resin, the debromination stage being subsequent to the abovementioned first stage.

10. Process according to any one of Claims 1 to 9, characterised in that it is applied to aqueous sodium chloride solutions purified beforehand from calcium and magnesium.
